(19) Europäisches Patentamt
European Patent Office
Office européen des brevets

(11) Veröffentlichungsnummer: **0 394 676 B1**

# EUROPÄISCHE PATENTSCHRIFT

(12)

(45) Veröffentlichungstag der Patentschrift:
18.12.91 Patentblatt 91/51

(51) Int. Cl.⁵ : **B60N 3/00, B60R 27/00**

(21) Anmeldenummer: **90105488.2**

(22) Anmeldetag : **23.03.90**

(54) **Windschutz für ein Cabriolet.**

(30) Priorität : 28.04.89 DE 3914035

(43) Veröffentlichungstag der Anmeldung :
31.10.90 Patentblatt 90/44

(45) Bekanntmachung des Hinweises auf die
Patenterteilung :
18.12.91 Patentblatt 91/51

(84) Benannte Vertragsstaaten :
ES FR GB IT

(56) Entgegenhaltungen :
EP-A- 0 316 749
DE-C- 3 732 562

(73) Patentinhaber : DAIMLER-BENZ
AKTIENGESELLSCHAFT
Mercedesstrasse 136
W-7000 Stuttgart 60 (DE)

(72) Erfinder : Götz, Hans, Dipl.-Ing.
Dahlienstrasse 35
W-7030 Böblingen 4 (DE)
Erfinder : Baumann, Karl-Heinz, Dipl.-Ing. (FH)
Brühlstrasse 3
W-7048 Bondorf (DE)

EP 0 394 676 B1

## Beschreibung

Die Erfindung betrifft einen Windschutz für ein Cabriolet mit einem um eine Fahrzeugquerachse in eine etwa horizontale Ruhestellung schwenkbaren, etwa U-förmigen Überrollbügel, wobei der Windschutz einen hinter eine vordere Sitzreihe hochschwenkbaren ersten Teil und einen den Raum hinter der Sitzreihe horizontal etwa auf Höhe der Gürtellinie des Fahrzeugs abdeckenden zweiten Teil aufweist und beide Teile schwenkbar miteinander verbunden sind, und wobei der erste Teil in seiner Ruhelage auf dem zweiten Teil aufliegt.

Der vorliegenden Erfindung lag die Aufgabe zugrunde, einen derartigen Windschutz so auszubilden, daß das Hochschwenken seines ersten Teils in seine Wirkstellung einfach und schnell erfolgen kann, ohne daß der Fahrer dazu das Fahrzeug verlassen muß.

Diese Aufgabe wird bei einem gattungsgemäßen Windschutz erfindungsgemäß jeweils durch die kennzeichnenden Merkmale der Ansprüche 1 und 2 gelöst.

Der Gegenstand der Erfindung soll im folgenden anhand von in der Zeichnung dargestellten Ausführungsbeispielen näher erläutert werden. In der Zeichnung zeigen :

| | |
|---|---|
| Figur 1 | eine perspektivische Darstellung eines am Fahrzeug montierten Windschutzes, dessen erster Teil in seine Ruhestellung heruntergeschwenkt ist, |
| Figur 2 | perspektivisch eine Zwischenstellung beim Hochschwenken des Überrollbügels, |
| Figur 3 | den Windschutz in seiner Wirkstellung bei wieder in Ruhelage befindlichem Überrollbügel, und die |
| Fig. 4 + 5 | Darstellungen einer einfachen Rasteinrichtung bei verschiedenen Schwenkstellungen von Überrollbügel bzw. Windschutz. |

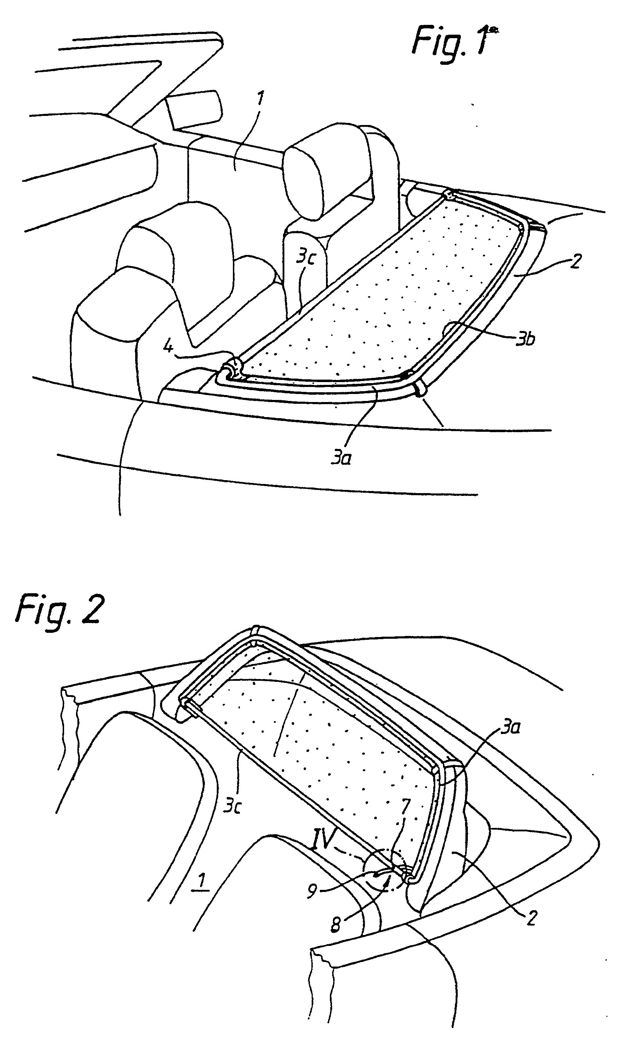

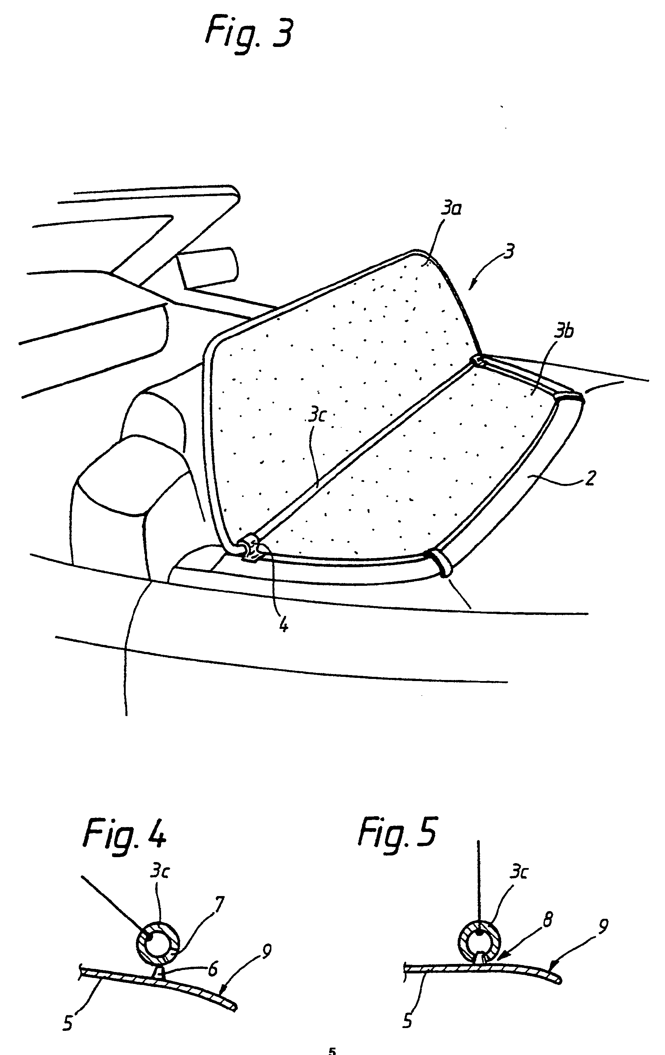

Das in den Fig. 1 bis 3 der Zeichnung angedeutete Cabriolet 1 weist einen um Fahrzeugquerachse schwenkbaren Überrollbügel 2 auf, der in den Fig. 1 und 3 in seiner nach unten geschwenkten Ruhelage und in Fig. 2 in einer Zwischenstellung dargestellt ist.

Am Überrollbügel 2 ist in nicht näher erläuterter Weise der zweite Teil 3b eines Windschutzes 3 lösbar befestigt, dessen erster Teil 3a in Fig. 3 in seiner hochgeschwenkten Wirkstellung und in Fig. 1 in seiner nach hinten geklappten Ablagestellung gezeigt ist.

Die Teile 3a und 3b des Windschutzes 3 bestehen im dargestellten Ausführungsbeispiel jeweils aus einem mit einem Netz bespannten Rahmen.

Der zweite Teil 3b des Windschutzes 3 trägt in seinen Eckbereichen Schwenklager 4 zur Befestigung des ersten Teils 3a, die in nicht dargestellter Weise z.B. mit Kugelschnäppern zur Sicherung der Ruhestellung und der Wirkstellung des ersten Teils 3a ausgestattet sein können.

Bei einer derartigen Anordnung kann nun über einen Komfortantrieb, wie er z.B. der DE-C-3732562 als bekannt zu entnehmen ist, der Überrollbügel 2 und mit ihm die Teile 3a und 3b des Windschutzes 3 soweit hochgeschwenkt werden, daß eine auf einem Vordersitz befindliche Person den ersten Teil 3a ergreifen und in seine durch die Kugelschnäpper gesicherte Wirkstellung einrasten kann, während der Überrollbügel 2 zusammen mit dem zweiten Teil 3b des Windschutzes 3 in seine Ablagestellung zurückfährt.

Vom Bauumfang her etwas aufwendiger, aber noch komfortabler in der Betätigung ist eine Ausführung nach Anspruch 2, wie sie z.B. in Fig. 2 schematisch angedeutet und in Fig. 4 und 5 näher dargestellt ist.

Dabei liegt am unteren Rahmenteil 3c des ersten Teiles 3a des Windschutzes 3 ein durch eine am Fahrzeug in geeigneter Weise befestigte Blattfeder 5 beaufschlagter Rastzapfen 6 an, der bei einer bestimmten Winkelstellung des Rahmenteils 3c, die der aufgerichteten Wirkstellung entspricht, in eine Bohrung 7 eintaucht und damit eine Verriegelung herstellt. Wenn die so geschaffene Rasteinrichtung 8 wirksam ist (Fig.5), kann der Überrollbügel 2 zurückgefahren werden. Das Lösen der Rasteinrichtung 8 erfolgt durch Druck auf das freie Ende 9 der Blattfeder 5.

## Patentansprüche

1. Windschutz für ein Cabriolet mit einem um eine Fahrzeugquerachse in eine etwa horizontale Ruhestellung schwenkbaren, etwa U-förmigen Überrollbügel (2), wobei der Windschutz (3) einen hinter eine vordere Sitzreihe hochschwenkbaren ersten Teil (3a) und einen den Raum hinter der Sitzreihe horizontal etwa auf Höhe der Gürtellinie des Fahrzeugs abdeckenden zweiten Teil aufweist und beide Teile schwenkbar miteinander verbunden sind, und wobei der erste Teil 3a in seiner Ruhelage auf dem zweiten Teil (3b) aufliegt, **dadurch gekennzeichnet**, daß durch Hochfahren des Überrollbügels (2) durch einen Komfortantrieb der erste Teil (3a) in Griffweite von auf den Vordersitzen sitzenden Personen bringbar ist.

2

2. Windschutz nach dem Oberbegriff des Anspruchs 1, **dadurch gekennzeichnet**, daß durch Hochfahren des Überrollbügels (2) durch einen Komfortantrieb der erste Teil (3a) selbsttätig in Wirkverbindung mit einer fahrzeugfesten, lösbaren Rasteinrichtung (8) bringbar ist, die den ersten Teil (3a) in seiner hochgeschwenkten Betriebsstellung beim Zurückfahren des Überrollbügels (2) festhält.

## Claims

1. A windshield for a convertible car with a substantially channel-shaped roll-over bar (2) swivellable around a transversal axis of the vehicle into a substantially horizontal rest position, the windshield (3) having a first part (3a) swivellable upwards behind a first row of seats, and a second part (3b) covering the space behind the row of seats horizontally substantially at the level of the waistline of the vehicle, and the two parts being swivellably connected together, characterized in that, by the raising of the roll-over bar (2) effected by a conveniently-accessible drive mechanism, the first part (3a) can be brought to an area within the reach of persons sitting on the front seat.

2. A windshield according to the preamble to claim 1, characterized in that, by the raising of the roll-over bar (2) effected by a conveniently-accessible drive mechanism, the first part (3a) can be brought automatically into operative connection with a detachable locking device (8) rigidly connected with the vehicle which holds the first part (3a) in its upwardly-swivelled operative position on the return movement of the roll-over bar (2).

## Revendications

1. Pare-vent pour cabriolet, comprenant un arceau de sécurité (2) sensiblement en forme de U, qu'on peut rabattre dans une position de repos à peu près horizontale autour d'un axe transversal du véhicule, le pare-vent (3) comprenant une première partie (3a) qui peut être relevée derrière une rangée de sièges avant et une deuxième partie (3b) qui recouvre horizontalement l'espace situé derrière la rangée de sièges, à peu près à la hauteur de la ceinture du véhicule, et les deux parties étant reliées l'une à l'autre par une articulation, la première partie (3a) reposant sur la deuxième partie (3b) dans sa position de repos, caractérisé en ce que la première partie (3a) peut être placée à portée de la main des personnes assises sur les sièges avant par le relevage de l'arceau de sécurité (2) exécuté par une commande automatique.

2. Pare-vent selon le préambule de la revendication 1, caractérisé en ce que la première partie (3a) peut être amenée automatiquement, par le relevage de l'arceau de sécurité (2) exécuté par une commande automatique, en position de coopération avec un dispositif de verrouillage (8) déverrouillable solidaire du véhicule, qui retient la première partie (3a) dans sa position de service relevée pendant que l'arceau de sécurité (2) se rabat.

*Fig. 1*

*Fig. 2*

# Fig. 3

# Fig. 4

# Fig. 5